# EUROPÄISCHE PATENTANMELDUNG

(11) **EP 3 715 030 A1**
(43) Veröffentlichungstag der Anmeldung: **30.09.2020**
(21) Anmeldenummer: 20165240.1
(22) Anmeldetag: 24.03.2020
(51) Int. Cl.: B23C 5/10, B24B 3/02, B24B 19/02

(54) **SCHAFTFRÄSER**

(30) Priorität: 25.03.2019 DE 102019204063
(71) Anmelder: Gühring Kg, 72458 Albstadt (DE)
(72) Erfinder: Gauggel, Christian, 72469 Heinstetten (DE); Bozga, Marius-Bogdan, 437318 Sucui de Jos (Com. Suciu de Sus) (RO)
(74) Vertreter: Winter, Brandl, Fürniss, Hübner, Röss, Kaiser, Polte - Partnerschaft mbB

(57) **Zusammenfassung**

Die Erfindung betrifft einen Schaftfräser (1; 100) zur Fräsbearbeitung von Verbundwerkstoffen, z.B. Faserverbundkunststoffen, mit einer definierten Drehrichtung, einem Schaft (10) und einem Schneidteil (20), wobei der Schneidteil (20) sich von einem schaftseitigen Ende bis zu einem stirnseitigen Ende erstreckt und in einem an das stirnseitige Ende des Schneidteils (20) angrenzenden vorderen Längenbereich (30) eine Vielzahl von mit einem positiven Drallwinkel verlaufenden ersten Umfangsschneiden (31), die jeweils an eine mit einem positiven Drallwinkel verlaufende erste Nut (32) angrenzen, und in einem an das schaftseitige Ende des Schneidteils (20) angrenzenden hinteren Längenbereich (40) eine Vielzahl von mit einem negativen Drallwinkel verlaufenden zweiten Umfangsschneiden (41), die jeweils an eine mit einem negativen Drallwinkel verlaufende zweite Nut (42) angrenzen, aufweist. Der Schaftfräser (1; 100) zeichnet sich dadurch aus, dass zumindest ein Teil der ersten Umfangsschneiden (31) im vorderen Längenbereich (30) jeweils in Schneidensegmente geteilt sind, und zumindest ein Teil der zweiten Umfangsschneiden (41) im hinteren Längenbereich (40) jeweils in Schneidensegmente geteilt sind.

## Beschreibung

Die Erfindung betrifft einen Schaftfräser zur Fräsbearbeitung von Verbundwerkstoffen, z.B. Faserverbundkunststoffen (FVK) wie kohlenstoff- oder glasfaserverstärkten Kunststoffen (CFK/GFK).

Faserverbundkunststoffe sind aufgrund ihrer mehrphasigen Struktur relativ schwer zu bearbeiten. So ist bei der Fräsbearbeitung einer FVK-Platte häufig beispielsweise eine Delamination von Faserverbundschichten oder Faserüberstände an den beiden Plattenoberflächen zu beobachten. Eine wirtschaftliche Bearbeitung moderner Faserverbundkunststoffe erfordert daher insbesondere in der Serienfertigung eine angepasste Werkzeuggestaltung, mit denen sich eine Delamination oder Faserüberstände an einem bearbeiteten FVK-Bauteil zuverlässig vermeiden lässt. Zu den erwähnten Werkzeugen mit angepasster Werkzeuggestaltung zählen beispielsweise Schaftfräser, die als sogenannte Kompressionsfräser ausgeführt sind, bei denen durch eine spezielle Schneidteilgestaltung gegeneinander gerichtete Axialschnittkräfte erzeugt werden, die zu einer Kompression eines fräsbearbeiteten FVK-Werkstoffs führen und dadurch einer Delamination oder Faserüberständen an den beiden Plattenoberflächen vorbeugen.

So ist beispielsweise in der DE 102006022572 A1 ein Schaftfräser mit einem Schaft und einem axial an den Schaft anschließenden Schneidteil angegeben, der eine geradzahlige Anzahl von beispielsweise vier Schneidstegen hat, die in Umfangsrichten durch Nuten voneinander beabstandet sind und jeweils eine Vielzahl von mit einem Links- oder Rechtsdrall verlaufenden Umfangsschneiden aufweisen. Den oben erwähnten Problemen Rechnung tragend wird vorgeschlagen, dass sich die Drallrichtung der Umfangsschneiden von in Umfangsrichtung unmittelbar aufeinander folgender Schneidstege von links nach rechts bzw. rechts nach links umkehrt. Die bei der Fräsbearbeitung eines FVK-Werkstoffs an zwei in Umfangsrichtung unmittelbar aufeinander folgenden Schneidstege auftretenden Zerspankräfte erzeugen daher gegeneinander gerichtete Axialkräfte, die zu einer Kompression des FVK-Werkstoffs führen. Wird eine FVK-Platte gefräst, kann also erreicht werden, dass an die beiden Plattenoberflächen angrenzende Faserverbundschichten oder aus dem FVK-Werkstoff überstehende Fasern zuverlässig abgetrennt werden.

Aus beispielsweise der WO 2017/134011 A1 oder der US 9,174,287 B2 kennt der Fachmann einen Schaftfräser, der einen an einen Schaft anschließenden Schneidteil mit in Bezug auf die Drehachse des Schaftfräsers links- und rechtsgedrallten Umfangsschneiden aufweist, die durch sich kreuzende links- und rechtsgedrallte Nuten in Segmente geteilt sind. Die links- und rechtsgedrallten Nuten erstrecken sich mit einem gleichbleibenden Nutquerschnitt über eine Schneidzone im Schneidteil bzw. von einem stirnseitigen Ende bis zu einem schaftseitigen Ende des Schneidteils.

Im Unterschied dazu zeigt und beschreibt die US 3,913,196 oder die US 2013/0294852 A1 einen rechtsschneidenden Schaftfräser mit einem Schaft und einem an den Schaft anschließenden Schneidteil, der sich von einem schaftseitigen Ende bis zu einem stirnseitigen Ende erstreckt und in einem vorderen Längenbereich, der sich von dem stirnseitigen Ende bis zu einem Übergangsstelle im Mittelbereich des Schneidteils erstreckt, eine Vielzahl von rechtsgedrallten (d.h. mit einem positiven Drallwinkel verlaufenden) ersten Umfangsschneiden, die jeweils an eine rechtsgedrallte erste Nut (Spannut) angrenzen, und in einem hinteren Längenbereich, der sich von der oben erwähnten Übergangsstelle im Mittelbereich des Schneidteils bis zum schaftseitigen Ende des Schneidteils erstreckt, eine Vielzahl von linksgedrallten (d.h. mit einem negativen Drallwinkel verlaufenden) zweiten Umfangsschneiden, die jeweils an eine linksgedrallte zweite Nut (Spannut) angrenzen. Durch die gegenläufige Drallrichtung der ersten und zweiten Umfangsschneiden in dem vorderen bzw. hinteren Längenbereich des Schneidteils resultieren aus den bei einer Fräsbearbeitung eines FVK-Werkstoffs auftretenden Zerspankräften gegeneinander gerichtete Axialkräfte, die eine Kompression des FVK-Werkstoffs bewirken. Aufgrund der Aufteilung der ersten und zweiten Umfangsschneiden auf den vorderen bzw. hinteren Längenbereich des Schneidteils ergibt sich in dem vorderen Längenbereich in der Summe ein ziehender Schnitt, durch den Faserverbundschichten oder Fasern in Richtung des schaftseitigen Ende des Schneidteils gezogen werden, und in dem hinteren Längenbereich ein schiebender oder drückender Schnitt, durch den Faserverbundschichten oder Fasern in Richtung des stirnseitigen Endes des Schneidteils hin geschoben oder gedrückt werden. Durch die gegeneinander gerichteten Axialkräfte kann eine Delamination von Faserverbundschichten oder können Faserüberstände an den beiden Plattenoberflächen einer fräsbearbeiteten FVK-Platte vermieden werden. Da die ersten und zweiten Umfangsschneiden in den vorderen bzw. hinteren Längenbereich des Schneidteils jeweils individuell eingeschliffen werden, gestaltet sich die Ausbildung des Schneidteils und damit des Schaftfräsers insgesamt jedoch als relativ schwierig und zeitaufwändig.

Ausgehend von einem Schaftfräser, wie er aus der US 3,913,196 oder US 2013/0294852 A1 bekannt ist, liegt der Erfindung daher die Aufgabe zugrunde, einen als Kompressionsfräser ausgeführten Schaftfräser zu schaffen, der sich schneller und einfacher herstellen lässt.

Diese Aufgabe wird durch einen Schaftfräser mit den Merkmalen des Anspruchs 1 gelöst. Vorteilhafte oder bevorzugte Weiterbildungen sind Gegenstand abhängiger Ansprüche.

Ein erfindungsgemäßer Schaftfräser zur Fräsbearbeitung von Verbundwerkstoffen, z.B. Faserverbundkunststoffen (FVK), hat eine definierte Schneid- bzw. Drehrichtung, d.h. er ist entweder rechtsschneidend/rechtsdrehend oder linksschneidend/linksdrehend ausgelegt. Der Schaftfräser weist in funktionaler Hinsicht einen in ein Spannfutter einspannbaren Schaft und einen Schneidteil auf. Der Schneidteil kann axial unmittelbar oder über einen nichtschneidenden Verbindungsteil mittelbar an den Schaft anschließen. Der Schneidteil erstreckt sich von einem schaftseitigen Ende bis zu einem stirnseitigen Ende und weist in einem an sein stirnseitiges Ende angrenzenden stirnseitigen/vorderen Längenbereich ausschließlich oder zumindest nahezu ausschließlich eine Vielzahl von mit einem positiven Drallwinkel verlaufenden ersten Umfangsschneiden, die jeweils an eine mit einem positiven Drallwinkel verlaufende erste Nut angrenzen, und in einem an sein schaftseitiges Ende angrenzenden schaftseitigen/hinteren Längenbereich ausschließlich oder zumindest nahezu ausschließlich eine Vielzahl von mit einem negativen Drallwinkel verlaufenden zweiten Umfangsschneiden auf, die jeweils an eine mit einem negativen Drallwinkel verlaufende zweite Nut angrenzen.

Das Vorzeichen des Drallwinkels (positiv oder negativ) bzw. der Drallrichtung (positiv oder negativ) der Umfangsschneiden und Nuten ist durch die Schneidrichtung/Drehrichtung des Schaftfräsers eindeutig bestimmt. Bei einem rechtsschneidenden/rechtsdrehenden Schaftfräser haben rechtsgewendelte/rechtsgängige/rechtsgedrallte Umfangsschneiden/Nuten einen positiven Drallwinkel und linksgewendelte/linksgängige/linksgedrallte Umfangsschneiden/Nuten einen negativen Drallwinkel. Umgekehrt haben bei einem linksschneidenden/linksdrehenden Schaftfräser linksgewendelte/linksgängige/linksgedrallte Umfangsschneiden/Nuten einen positiven Drallwinkel und rechtsgewendelte/rechtsgängige/rechtsgedrallte Umfangsschneiden/Nuten einen negativen Drallwinkel. Eine Umfangsschneide mit einem positiven Drallwinkel erzeugt eine axiale Schnittkraft in Richtung des schaftseitigen Endes des Schneidteils und führt einen ziehenden Schnitt aus, während eine Umfangsschneide mit einem negativen Drallwinkel eine Schnittkraft in Richtung des stirnseitigen Endes des Schneidteils erzeugt und einen drückenden Schnitt aus.

Jede Umfangsschneide bildet in der dem Fachmann bekannten Art und Weise im Querschnitt einen Schneidkeil, der durch einen Keilwinkel, Freiwinkel und Spanwinkel eindeutig definiert ist. In Erstreckungsrichtung gesehen erstreckt sich jede Umfangsschneide von einem stirnseitig liegenden Schneideneck zu einem schaftseitig liegenden Schneideneck und entspricht der Schnittlinie zwischen einer Freifläche und einer Spanfläche. Jede Umfangsschneide hat daher eine über ein bloßes Schneideneck hinausgehende Umfangsschneidenlänge.

Im Unterschied zu den aus dem Stand der Technik bekannten Schaftfräsern, z.B. einem Schaftfräser der oben diskutierten US 3,913,196 oder US 2013/0294852 A1, sind bei dem erfindungsgemäßen Schaftfräser zumindest ein Teil der ersten Umfangsschneiden im vorderen Längenbereich jeweils in Schneidensegmente geteilt, und zumindest ein Teil der zweiten Umfangsschneiden im hinteren Längenbereich jeweils in Schneidensegmente geteilt. Die obige Spezifikation einer Umfangsschneide gilt analog für ein Schneidensegment einer Umfangsschneide. Jedes Schneidensegment einer Umfangsschneide erstreckt sich daher von einem stirnseitig liegenden Schneiden(segment)eck zu einem schaftseitig liegenden Schneiden(segment)eck und hat daher eine über ein bloßes Schneiden(segment)eck hinausgehende Umfangsschneidenlänge. Die sich aus diesen Merkmalen ergebenden Vorteile werden im Folgenden anhand von zwei Ausführungsformen der Erfindung diskutiert.

Das Merkmal, dass sich im vorderen Längenbereich "ausschließlich oder zumindest nahezu ausschließlich" eine Vielzahl von mit einem positiven Drallwinkel verlaufenden ersten Umfangsschneiden und im hinteren Längenbereich "ausschließlich oder zumindest nahezu ausschließlich" eine Vielzahl von mit einem negativen Drallwinkel verlaufenden zweiten Umfangsschneiden befinden, ist so zu verstehen, dass das Vorhandensein eines auf dem Außenumfang des Schaftfräsers liegenden Schneidensegmentecks, das beispielsweise entsteht, wenn sich eine mit einem positiven Drallwinkel verlaufende erste Nut und eine mit einem negativen Drallwinkel verlaufende zweite Nut bzw. deren zugehörige Umfangsschneiden kreuzen, nicht ausgeschlossen ist, ein solches Schneidensegmenteck aber nicht als eine einen Drallwinkel aufweisende Umfangsschneide betrachtet wird.

### Erste Ausführungsform

Bei einem Schaftfräser gemäß einer ersten Ausführungsform der Erfindung erstrecken sich die ersten Nuten in den hinteren Längenbereich hinein zumindest bis an das schaftseitige Ende des Schneidteils heran, erstrecken sich die zweiten Nuten in den vorderen Längenbereich hinein zumindest bis an das stirnseitige Ende des Schneidteils heran, wobei die ersten Nuten in dem hinteren Längenbereich schmaler sind als in dem vorderen Längenbereich, und die zweiten Nuten in dem vorderen Längenbereich schmaler sind als in dem hinteren Längenbereich. Bei dem Schaftfräser gemäß der ersten Ausführungsform der Erfindung ist jede Umfangsschneide in Schneidensegmente geteilt. Die erfindungsgemäße Teilung der mit einem positiven Drallwinkel verlaufenden ersten Umfangsschneiden im vorderen Längenbereich in Schneidensegmente wird bei dem Schaftfräser gemäß der ersten Ausführungsform der Erfindung durch die mit einem negativen Drallwinkel verlaufenden zweiten Nuten erreicht, die im vorderen Längenbereich schmaler sind als im hinteren Längenbereich. Analog dazu wird die erfindungsgemäße Teilung der mit einem negativen Drallwinkel verlaufenden zweiten Umfangsschneiden im hinteren Längenbereich in Schneidensegmente bei dem Schaftfräser gemäß der ersten Ausführungsform der Erfindung durch die mit einem positiven Drallwinkel verlaufenden ersten Nuten erreicht, die im hinteren Längenbereich schmaler sind als im vorderen Längenbereich. Mit anderen Worten kreuzen sich die ersten und zweiten Nuten sowohl im vorderen Längenbereich als auch im hinteren Längenbereich.

Bei dem Schaftfräser gemäß der ersten Ausführungsform der Erfindung ist daher vorgesehen, dass die mit einem positiven Drallwinkel verlaufenden ersten Nuten sich in Richtung von dem stirnseitigen Ende zu dem schaftseitigen Ende des Schneidteils nach dem vorderen Längenbereich des Schneidteils mit einer zu der jeweils angrenzenden ersten Umfangsschneide hin verringerten Nutbreite durch den hinteren Längenbereich des Schneidteils, in dem nahezu ausschließlich die Vielzahl von mit einem negativen Drallwinkel verlaufenden zweiten Umfangsschneiden ausgebildet sind, zumindest bis an das schaftseitige Ende des Schneidteils heran erstrecken. Des Weiteren erstrecken sich die mit einem negativen Drallwinkel verlaufenden zweiten Nuten in Richtung von dem schaftseitigen Ende zu dem stirnseitigen Ende des Schneidteils nach dem hinteren Längenbereich des Schneidteils mit einer zu der jeweils angrenzenden zweiten Umfangsschneide hin verringerten Nutbreite durch den vorderen Längenbereich des Schneidteils, in dem nahezu ausschließlich die Vielzahl von mit einem positiven Drallwinkel verlaufenden ersten Umfangsschneiden ausgebildet sind, bis zum stirnseitigen Ende des Schneidteils heran.

Anders ausgedrückt heißt das, dass sich die mit einem positiven Drallwinkel verlaufenden ersten Nuten in Richtung von dem schaftseitigen Ende zu dem stirnseitigen Ende des Schneidteils am Übergang von dem hinteren Längenbereich in den vorderen Längenbereich des Schneidteils in Schneidrichtung/Drehrichtung soweit verbreitern, dass in dem vorderen Längenbereich keine mit einem negativen Drallwinkel verlaufenden zweiten Umfangsschneiden ausgebildet sind. Analog dazu verbreitern sich die mit einem negativen Drallwinkel verlaufenden zweiten Nuten in einer Richtung von dem stirnseitigen Ende zu dem schaftseitigen Ende des Schneidteils am Übergang von dem vorderen Längenbereich in den hinteren Längenbereich des Schneidteils in Schneidrichtung/Drehrichtung soweit, dass in dem hinteren Längenbereich keine mit einem positiven Drallwinkel verlaufenden ersten Umfangsschneiden ausgebildet sind.

Durch diese Gestaltung wird in dem vorderen Längenbereich des Schneidteils ein nahezu ausschließlich ziehender Schnitt und in dem hinteren Längenbereich des Schneidteils ein nahezu ausschließlich schiebender oder drückender Schnitt erreicht. Bei einer Fräsbearbeitung einer FVK-Platte werden daher gegeneinander gerichtete Axialkräfte erreicht, die eine Kompression des FVK-Werkstoffs bewirken und einer Delamination sowie Faserüberständen an den beiden Plattenoberflächen der FVK-Platte vorbeugen.

Wie oben beschrieben hat die Verschmälerung oder Verringerung der Nutbreiten der ersten Nuten in dem hinteren Längenbereich des Weiteren zur Folge, dass die von den ersten Nuten gekreuzten zweiten Umfangsschneiden in dem hinteren Längenbereich in mit einem negativen Drallwinkel verlaufende Schneidensegmente geteilt werden. Analog dazu hat die Verschmälerung oder Verringerung der Nutbreiten der zweiten Nuten in dem vorderen Längenbereich zur Folge, dass die von den schmaleren zweiten Nuten gekreuzten ersten Umfangsschneiden in dem vorderen Längenbereich in mit einem positiven Drallwinkel verlaufende Schneidensegmente geteilt werden. Der Schaftfräser gemäß der ersten Ausführungsform der Erfindung zeichnet sich daher neben den eingangs erläuterten Wirkungen eines Kompressionsfräsers, wie sie etwa auch in der oben diskutierten US 3,913,196 oder US 2013/0294852 A1 beschrieben sind, dadurch aus, dass die in dem vorderen Längenbereich vorhandenen ersten Umfangsschneiden und die in dem hinteren Längenbereich vorhandenen zweiten Umfangsschneiden jeweils ein Spanteilerprofil aufweisen. In dem vorderen Längenbereich fungieren die mit einem positiven Drallwinkel verlaufenden ersten Nuten aufgrund der größeren Nutbreiten als spanabführende Nuten. In dem hinteren Längenbereich fungieren die mit einem positiven Drallwinkel verlaufenden ersten Nuten aufgrund der verringerten Nutbreiten als Spanteilernuten oder Spanbrecher. In dem hinteren Längenbereich fungieren die mit einem negativen Drallwinkel verlaufenden zweiten Nuten aufgrund der größeren Nutbreiten als spanabführende Nuten. In dem vorderen Längenbereich fungieren die mit einem negativen Drallwinkel verlaufenden zweiten Nuten aufgrund der verringerten Nutbreiten als Spanteilernuten oder Spanbrecher.

Aufgrund der Erstreckung der ersten Nuten in den hinteren Längenbereich hinein zumindest bis an das schaftseitige Ende des Schneidteils heran und der zweiten Nuten in den vorderen Längenbereich hinein zumindest bis an das stirnseitige Ende des Schneidteils heran und der damit verbundenen erfindungsgemäßen Teilung der Umfangsschneiden in Schneidensegmente lässt sich der Schneidteil zudem einfacher und wirtschaftlicher herstellen als z.B. der aus der oben diskutierten US 3,913,196 oder US 2013/0294852 A1 bekannte Schaftfräser. Eine derartige Gestaltung bietet den Vorteil, dass die die ersten und zweiten Umfangsschneiden begrenzenden ersten bzw. zweiten Nuten nacheinander mit Hilfe einer Schleifscheibe, die ein einem Querschnittsprofil der ersten und zweiten Nuten entsprechendes Schleifscheibenprofil hat und mit einem der jeweiligen Nut entsprechenden Drall und über die Länge der entsprechenden Nut in einem Zug über den Schneidteil geführt wird, in den Schneidteil eingeschliffen werden können. Durch eine Änderung des Anstellwinkels und/oder der Zustelltiefe der Schleifscheibe gegenüber der Drehachse des Schaftfräsers am Übergang von dem vorderen Längenbereich in den hinteren Längenbereich oder umgekehrt kann die Nutbreite einer jeweils einzuschleifenden Nut verringert oder vergrößert werden. Alternativ dazu kann die Nutbreite einer jeweils einzuschleifenden Nut durch Einschleifen einer weiteren parallel versetzten Nut in den vorderen Längenbereich oder hinteren Längenbereich vergrößert werden. Entsprechende Verfahren sind in Form unabhängiger Ansprüche 13 und 14 beansprucht.

Die Nutbreite jeder zweiten Nut in dem vorderen Längenbereich des Schneidteils kann in der ersten Ausführungsform der Erfindung beispielsweise das 0,1 - bis 0,8-Fache, vorzugsweise das 0,1- bis 0,5-Fache, der Nutbreite jeder ersten Nut in dem vorderen Längenbereich betragen. Analog dazu kann die Nutbreite jeder ersten Nut in dem hinteren Längenbereich beispielsweise das 0,1 bis 0,8-Fache, vorzugsweise das 0,1- bis 0,5-Fache, der Nutbreite jeder zweiten Nut in dem hinteren Längenbereich betragen.

Im Interesse einer möglichst einfachen und wirtschaftlichen Ausbildung des Schneidteils, vorzugsweise durch eine Schleifbearbeitung, kann die Nutbreite jeder ersten Nut in dem vorderen Längenbereich gleich der Nutbreite jeder zweiten Nut in dem hinteren Längenbereich und die Nutbreite jeder ersten Nut in dem hinteren Längenbereich gleich der Nutbreite jeder zweiten Nut in dem vorderen Längenbereich sein.

Wird der Schneidteil durch eine Schleifbearbeitung ausgebildet, lässt sich eine Verschmälerung oder Verbreiterung der ersten und zweiten Nuten beispielsweise durch eine Änderung der radialen Zustelltiefe (d.h. des radialen Abstands zur Drehachse des Schaftfräsers) einer für die Schleifscheibe verwendeten Schleifscheibe erreichen, die ein dem Nutquerschnitt der ersten und zweiten Nuten entsprechendes sich verjüngendes, beispielsweise rundes, Schleifscheibenprofil hat. So kann eine Verschmälerung der ersten und zweiten Nuten durch eine Verringerung der radialen Zustelltiefe der Schleifscheibe, eine Verbreiterung der ersten und zweiten Nuten durch eine Erhöhung der radialen Zustelltiefe der Schleifscheibe erreicht werden. Bei einem so ausgebildeten Schneidteil geht eine Änderung der Nutbreiten (Verschmälerung oder Verbreiterung) der ersten und zweiten Nuten mit einer Änderung der Nuttiefen (Verringerung der Tiefe, Vergrößerung der Tiefe) der ersten und zweiten Nuten einher. Die mit einem positiven Drallwinkel verlaufenden ersten Nuten können daher in dem vorderen Längenbereich des Schneidteils eine größere Nutbreite und eine größere Nuttiefe haben als in dem hinteren Längenbereich. Analog dazu können die mit einem negativen Drallwinkel verlaufenden zweiten Nuten in dem hinteren Längenbereich des Schneidteils eine größere Nutbreite und eine größere Nuttiefe haben als in dem vorderen Längenbereich.

### Zweite Ausführungsform

Die erfindungsgemäße Teilung zumindest eines Teils der ersten und zweiten Umfangsschneiden in Schneidensegmente kann alternativ zur ersten Ausführungsform der Erfindung, in der die ersten und zweiten Nuten über die Länge des Schneidteils veränderliche Nutbreiten aufweisen, gemäß einer zweiten Ausführungsform der Erfindung dadurch erreicht werden, dass sich in Umfangsrichtung des Schaftfräsers betrachtet nur jede zweite erste Nut in den hinteren Längenbereich hinein bis an das schaftseitige Ende des Schneidteils heran erstreckt und sich die übrigen ersten Nuten bis an den hinteren Längenbereich heran erstrecken, sich in Umfangsrichtung des Schaftfräsers betrachtet nur jede zweite zweite Nut in den vorderen Längenbereich hinein bis an das stirnseitige Ende des Schneidteils heran erstreckt und sich die übrigen zweiten Nuten bis an den vorderen Längenbereich heran erstrecken, wobei die Nutbreite jeder ersten Nut über ihre jeweilige Länge konstant ist, und die Nutbreite jeder zweiten Nut über ihre jeweilige Länge konstant ist.

Der Schaftfräser gemäß der zweiten Ausführungsform der Erfindung bietet gegenüber den aus dem Stand der Technik bekannten Schaftfräsern den Vorteil, dass zumindest diejenigen ersten Nuten, die sich bis an das schaftseitige Ende des Schneidteils heran erstrecken und zumindest einen Teil der zweiten Umfangsschneiden im hinteren Längenbereich in Schneidensegmente teilen, und diejenigen zweiten Nuten, die sich bis an das stirnseitige Ende des Schneidteils heran erstrecken und zumindest einen Teil der ersten Umfangsschneiden in Schneidensegmente teilen, bei einer Schleifbearbeitung mit einer Schleifscheibe in einem Zug ausgebildet werden können.

Des Weiteren können bei dem Schaftfräser gemäß der zweiten Ausführungsform der Erfindung auch die Nuttiefen der ersten und zweiten Nuten über ihre jeweilige Länge konstant sein, so dass eine möglichst einfache und schnelle Fertigung des Schaftfräsers erreicht werden kann, da bei einem Einschleifen der jeweiligen Nuten mit Hilfe einer Schleifscheibe weder der Anstellwinkel noch die Zustelltiefe der Schleifscheibe geändert werden muss.

Bei dem erfindungsgemäßen Schaftfräser kann die Länge des vorderen Längenbereichs das 0,5- bis 4-Fache, vorzugsweise das 1- bis 2,5-Fache, des Durchmessers des Schaftfräsers betragen.

An jeder Umfangsschneide grenzt in der üblichen Weise eine Spanfläche und Freifläche an. Die an der Spanfläche einer ersten oder zweiten Umfangsschneide ablaufenden Späne werden über die jeweils angrenzende erste bzw. zweite Nut abgeführt. Jede erste Nut in dem vorderen Längenbereich oder jede zweite Nut in dem hinteren Längenbereich hat daher die Funktion einer Spannut. Im Interesse einer möglichst einfachen und wirtschaftlichen Ausbildung des Schneidteils sind die ersten und/oder zweiten Nuten im vorderen bzw. hinteren Längenbereich jeweils so ausgelegt, dass sie sich in Schneid- oder Drehrichtung des Schaftfräsers gesehen bis zu einer jeweils nächstliegenden gleichläufigen Umfangsschneide erstrecken. Jede erste Nut kann in dem vorderen Längenbereich daher so ausgelegt sein, dass sie die Spanfläche der jeweils angrenzenden Umfangsschneide und die Freifläche der in Schneid- oder Drehrichtung nächstliegenden Umfangsschneide mit gleichem Drallwinkel bildet. Analog dazu kann jede zweite Nut in dem hinteren Längenbereich so ausgelegt sein, dass sie die Spanfläche der jeweils angrenzenden Umfangsschneide und die Freifläche einer jeweils in Drehrichtung vorausliegenden Umfangsschneide bildet. Die Spanfläche und Freifläche zweier in Schneid- oder Drehrichtung unmittelbar aufeinander folgender gleichläufiger Umfangsschneiden lassen sich somit durch eine Nut erzeugen.

Im Interesse einer möglichst einfachen und wirtschaftlichen Ausbildung des Schneidteils sind die Drallwinkel der ersten und zweiten Umfangsschneiden betragsmäßig vorzugsweise gleich groß.

Des Weiteren sind die ersten und zweiten Umfangsschneiden vorzugsweise jeweils in gleicher Zahl vorgesehen und äquidistant um eine Drehachse des Schaftfräsers verteilt.

Der Schneidteil eines erfindungsgemäßen Schaftfräsers kann zusätzlich stirnschneidend ausgeführt sein. Diesbezüglich können die mit einem positiven Drallwinkel verlaufenden ersten Nuten sich bis in die Stirnseite des Schneidteils hinein gezogen sein und Stirnschneiden bilden.

Die oben diskutierten und weitere Merkmale des erfindungsgemäßen Schaftfräsers werden im Folgenden anhand der beiliegenden Zeichnungen am Beispiel von zwei Ausführungsformen näher erläutert. In den Zeichnungen zeigt
Fig. 1 eine Seitenansicht eines erfindungsgemäßen Schaftfräsers gemäß einer ersten Ausführungsform;
Fig. 2 eine perspektivische Ansicht des Schaftfräsers aus Fig. 1;
Fig. 3a eine weitere Seitenansicht eines erfindungsgemäßen Schaftfräsers gemäß der ersten Ausführungsform;
Fig. 3b eine Seitenansicht des Schaftfräsers aus Fig. 3a, wobei nur erste Nuten mit einem positiven Drallwinkel gezeigt sind;
Fig. 3c eine Seitenansicht des Schaftfräsers aus Fig. 3a, wobei nur zweite Nuten mit einem negativen Drallwinkel gezeigt sind;
Fig. 4a bis 4d um jeweils 90° gedrehte Seitenansichten des Schaftfräsers gemäß der ersten Ausführungsform;
Fig. 5a eine Seitenansicht eines erfindungsgemäßen Schaftfräsers gemäß einer zweiten Ausführungsform;
Fig. 5b eine Seitenansicht des Schaftfräsers aus Fig. 5a, wobei nur zweite Nuten mit einem negativen Drallwinkel gezeigt sind;
Fig. 5c eine Seitenansicht des Schaftfräsers aus Fig. 5a, wobei nur erste Nuten mit einem positiven Drallwinkel gezeigt sind; und
Fig. 6a bis 6d um jeweils 90° gedrehte Seitenansichten des Schaftfräsers gemäß der zweiten Ausführungsform.

### Erste Ausführungsform

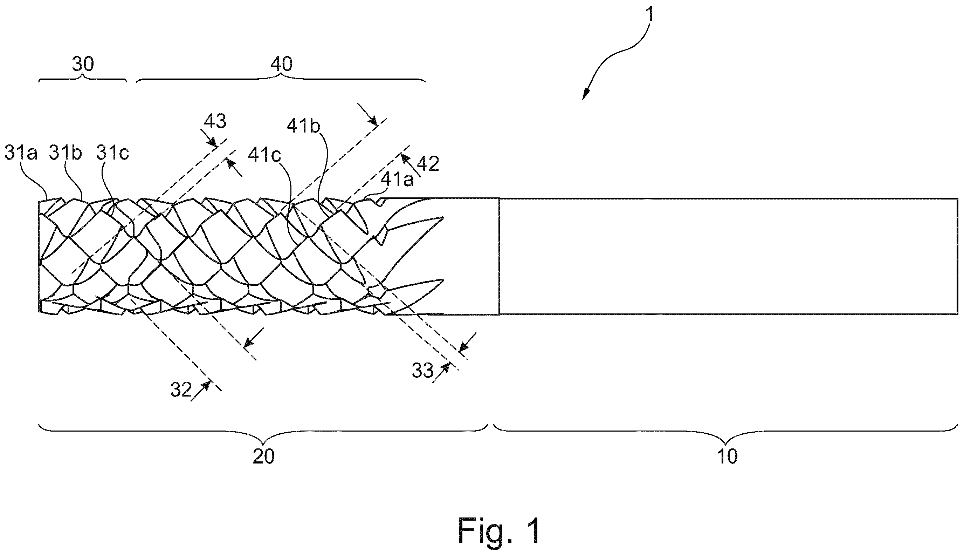

Die Fig. 1 bis 4d zeigen eine einen erfindungsgemäßen Schaftfräser 1 gemäß einer ersten Ausführungsform der Erfindung. Sowohl der Schaftfräser 1 gemäß der ersten Ausführungsform als auch ein später beschriebener Schaftfräser 100 gemäß einer zweiten Ausführungsform sind rechtsschneidend/rechtsdrehend ausgeführt. Es sei angemerkt, dass bei rechtsschneidenden/rechtsdrehenden Schaftfräsern rechtsgewendelte/rechtsgängige/rechtsgedrallte Umfangsschneiden/Nuten einen positiven Drallwinkel und linksgewendelte/linksgängige/linksgedrallte Umfangsschneiden/Nuten einen negativen Drallwinkel haben.

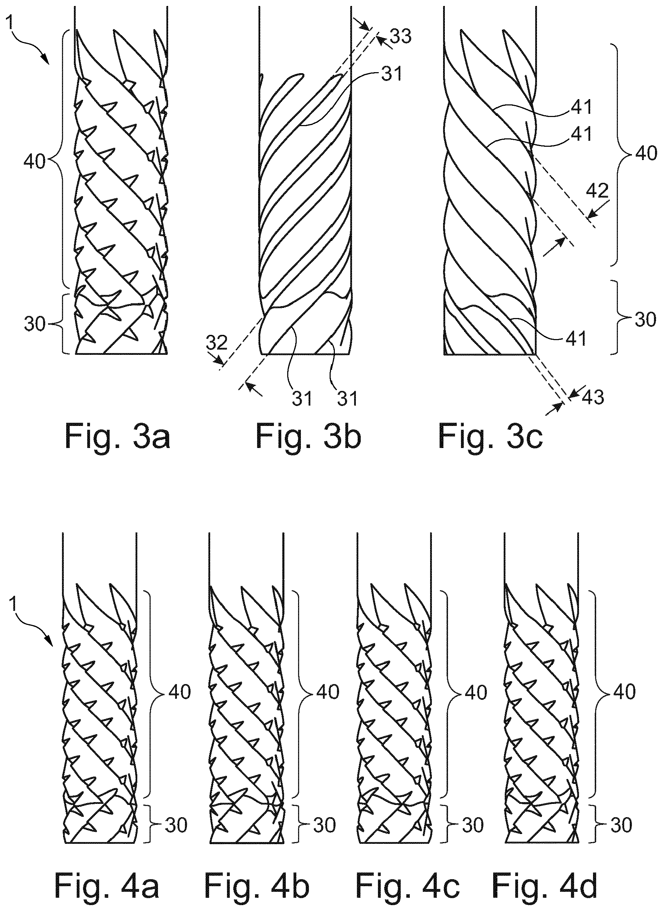

Der Schaftfräser 1 gemäß der ersten Ausführungsform der Erfindung weist in funktionaler Hinsicht einen in ein (nicht gezeigtes) Spannfutter einspannbaren Schaft 10 und einen Schneidteil 20 auf. Der Schneidteil 20 erstreckt sich von einem schaftseitigen Ende bis zu einem stirnseitigen Ende und weist in einem an sein stirnseitiges Ende angrenzenden (in Fig. 1 linken) stirnseitigen/vorderen Längenbereich 30 nahezu ausschließlich eine Vielzahl, in der gezeigten Ausführungsform sechs, von mit einem positiven Drallwinkel verlaufenden ersten Umfangsschneiden 31 auf. Die ersten Umfangsschneiden 31 sind im vorderen Längenbereich 30 jeweils in Schneidensegmente geteilt. In den Fig. 1 bis 4d wird beispielhaft auf eine der sechs ersten Umfangsschneiden 31 Bezug genommen, wobei in Fig. 1 gezeigt ist, dass die erste Umfangsschneide 31 (vgl. Fig. 3b) in mehrere Schneidensegmente 31a bis 31c (exemplarisch) geteilt ist. Die durch die Schneidensegmente 31a bis 31c gebildete Umfangsschneide 31 grenzt an eine mit einem positiven Drallwinkel verlaufende erste Nut 32 an.

Der Schneidteil 1 weist in einem an sein schaftseitiges Ende angrenzenden schaftseitigen/hinteren Längenbereich 40 nahezu ausschließlich eine Vielzahl, in der gezeigten Ausführungsform sechs, von mit einem negativen Drallwinkel verlaufenden zweiten Umfangsschneiden 41 auf. Die zweiten Umfangsschneiden 41 sind im hinteren Längenbereich 40 jeweils in Schneidensegmente geteilt. In den Fig. 1 bis 4d wird beispielhaft auf eine der sechs zweiten Umfangsschneiden 41 Bezug genommen, wobei in Fig. 1 gezeigt ist, dass die zweite Umfangsschneide 41 (vgl. Fig. 3c) in mehrere Schneidensegmente 41a bis 41c (exemplarisch) geteilt ist. Die durch die Schneidensegmente 41a bis 41c gebildete Umfangsschneide 41 grenzt an eine mit einem negativen Drallwinkel verlaufende zweite Nut 42 an. Bei dem Schaftfräser 1 gemäß der ersten Ausführungsform der Erfindung ist jede der Umfangsschneiden 31, 41 in Schneidensegmente geteilt. Der Betrag des negativen Drallwinkels der zweiten Umfangsschneiden 41 entspricht dem Betrag des positiven Drallwinkels der ersten Umfangsschneiden 31.

An jeder Umfangsschneide 31, 41 grenzt in der üblichen Weise eine Spanfläche und Freifläche an. Die an der Spanfläche einer ersten Umfangsschneide 31 oder zweiten Umfangsschneide 41 ablaufenden Späne werden über die jeweils angrenzende erste Nut 32 bzw. zweite Nut 42 abgeführt. Jede erste Nut 32 in dem vorderen Längenbereich 30 oder jede zweite Nut 42 in dem hinteren Längenbereich 40 hat daher die Funktion einer Spannut. Im Interesse einer möglichst einfachen und wirtschaftlichen Ausbildung des Schneidteils sind die ersten Nuten 32 im vorderen Längenbereich 30 und zweiten Nuten 42 im hinteren Längenbereich 40 jeweils so ausgelegt, dass sie sich in Schneid- oder Drehrichtung des Schaftfräsers 1 gesehen bis zu einer jeweils nächstliegenden gleichläufigen Umfangsschneide 31 bzw. 42 erstrecken. Jede erste Nut 32 ist in dem vorderen Längenbereich 30 daher so ausgelegt, dass sie die Spanfläche der jeweils angrenzenden Umfangsschneide 31 und die Freifläche der in Schneid- oder Drehrichtung nächstliegenden Umfangsschneide 31 mit gleichem Drallwinkel bildet (vgl. Fig. 3b). Analog dazu ist jede zweite Nut 42 in dem hinteren Längenbereich so ausgelegt, dass sie die Spanfläche der jeweils angrenzenden Umfangsschneide 41 und die Freifläche einer jeweils in Drehrichtung vorausliegenden Umfangsschneide 41 bildet. Die Spanfläche und Freifläche zweier in Schneid- oder Drehrichtung unmittelbar aufeinander folgender gleichläufiger Umfangsschneiden 31, 41 lassen sich somit durch eine Nut erzeugen.

Bei dem Schaftfräser 1 gemäß der ersten Ausführungsform der Erfindung erstrecken sich die ersten Nuten 32 in den hinteren Längenbereich 40 hinein bis an das schaftseitige Ende des Schneidteils 20 heran (vgl. Fig. 3b). Des Weiteren erstrecken sich die zweiten Nuten 42 in den vorderen Längenbereich 30 hinein bis an das stirnseitige Ende des Schneidteils 20 (vgl. Fig. 3c). Dabei sind die ersten Nuten 32, die im hinteren Längenberiech 40 mit dem Bezugszeichen 33 gekennzeichnet sind, in dem hinteren Längenbereich 40 schmaler als in dem vorderen Längenbereich 30. Analog dazu sind die zweiten Nuten 42, die im vorderen Längenbereich mit dem Bezugszeichen 43 gekennzeichnet sind, in dem vorderen Längenbereich 30 schmaler als in dem hinteren Längenbereich 40. Die Teilung der mit einem positiven Drallwinkel verlaufenden ersten Umfangsschneiden 31 im vorderen Längenbereich in Schneidensegmente 31a bis 31c wird bei dem Schaftfräser 1 gemäß der ersten Ausführungsform der Erfindung durch die mit einem negativen Drallwinkel verlaufenden zweiten Nuten 43 erreicht, die im vorderen Längenbereich 30 schmaler sind als im hinteren Längenbereich 40. Analog dazu wird die Teilung der mit einem negativen Drallwinkel verlaufenden zweiten Umfangsschneiden 41 im hinteren Längenbereich 40 in Schneidensegmente 41a bis 41c bei dem Schaftfräser 1 gemäß der ersten Ausführungsform der Erfindung durch die mit einem positiven Drallwinkel verlaufenden ersten Nuten 33 erreicht, die im hinteren Längenbereich 40 schmaler sind als im vorderen Längenbereich 30. Mit anderen Worten kreuzen sich die ersten Nuten 32 bzw. 33 und die zweiten Nuten 42 bzw. 43 sowohl im vorderen Längenbereich 30 als auch im hinteren Längenbereich 40.

Die Kreuzung bzw. Überlagerung der ersten Nuten 32 bzw. 33 und den zugehörigen Umfangsschneiden 31 und der zweiten Nuten 42 bzw. 43 und der zugehörigen Umfangsschneiden 41 ist in den Fig. 3a bis 3c gezeigt. Fig. 3b zeigt den Verlauf der mit einem positiven Drallwinkel verlaufenden ersten Nuten 32 bzw. 33, die im vorderen Längenbereich 30 breiter sind als im hinteren Längenbereich 40, und den zugehörigen ersten Umfangsschneiden 31. Analog dazu zeigt Fig. 3c den Verlauf der mit einem negativen Drallwinkel verlaufenden zweiten Nuten 42 bzw. 43, die im hinteren Längenbereich breiter sind als im vorderen Längenbereich 30, und den zugehörigen zweiten Umfangsschneiden 41. Wenn die Nutenverläufe der Fig. 3b und 3c überlagert werden, ergibt sich das in Fig. 3a und in Fig. 4a bis 4d um jeweils 90° gedreht dargestellte segmentierte Schneidprofil.

Mit anderen Worten verbreitern sich die mit einem positiven Drallwinkel verlaufenden ersten Nuten 31 in Richtung von dem schaftseitigen Ende zu dem stirnseitigen Ende des Schneidteils 20 am Übergang von dem hinteren Längenbereich 40 in den vorderen Längenbereich 30 des Schneidteils 20 in Schneidrichtung/Drehrichtung soweit, dass in dem vorderen Längenbereich 30 keine mit einem negativen Drallwinkel verlaufenden zweiten Umfangsschneiden 41 ausgebildet sind. Analog dazu verbreitern sich die mit einem negativen Drallwinkel verlaufenden zweiten Nuten 41 in einer Richtung von dem stirnseitigen Ende zu dem schaftseitigen Ende des Schneidteils 20 am Übergang von dem vorderen Längenbereich 30 in den hinteren Längenbereich 40 des Schneidteils 20 in Schneidrichtung/Drehrichtung soweit, dass in dem hinteren Längenbereich 40 keine mit einem positiven Drallwinkel verlaufenden ersten Umfangsschneiden 31 ausgebildet sind. Die ersten Umfangsschneiden 31 bzw. deren Schneidensegmente 31a bis 31 c mit einem positiven Drallwinkel erzeugen jeweils eine axiale Schnittkraft in Richtung des schaftseitigen Endes des Schneidteils 20 und führen einen ziehenden Schnitt aus, während die zweiten Umfangsschneiden 41 bzw. deren Schneidensegmente 41a bis 41c mit einem negativen Drallwinkel eine Schnittkraft in Richtung des stirnseitigen Endes des Schneidteils 20 erzeugen und jeweils einen drückenden Schnitt ausführen. In einem in den Figuren nicht im Detail dargestellten, zwischen dem vorderen Längenbereich 30 und dem hinteren Längenbereich 40 liegenden Übergangs- oder Überdeckungsbereich wird sowohl einen drückender als auch ein ziehender Schnitt ausgeführt.

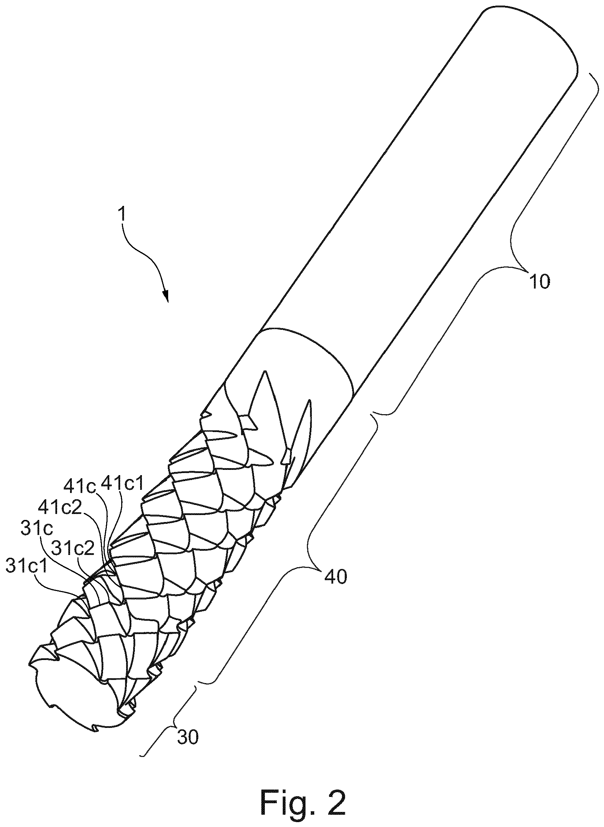

Wie beispielsweise in der perspektivischen Ansicht des Schaftfräsers 1 in Fig. 2 gezeigt ist, verbleiben nach der Kreuzung bzw. Überlagerung der ersten Nuten 32 bzw. 33 und der zweiten Nuten 42 bzw. 43 auf dem Außenumfang des Schaftfräsers 1 liegende Schneidensegmentecken, welche die in Umfangsdrehrichtung des Schaftfräsers 1 liegenden Enden eines jeden Schneidensegments bilden. In Fig. 2 sind beispielhaft die Schneidensegmentecken 31c1 und 31c2 des Schneidensegments 31c der mit einem positiven Drallwinkel verlaufenden ersten Umfangsschneide 31 und die Schneidensegmentecken 41c1 und 41c2 des Schneidensegments 41c der mit einem negativen Drallwinkel verlaufenden zweiten Umfangsschneide 41 dargestellt. Die Schneidensegmentecken 31c1 und 31c2 des Schneidensegments 31c im vorderen Längenbereich 30 können jedoch nicht als eine einen Drallwinkel aufweisende Umfangsschneide betrachtet werden, weshalb alle mit einem positiven Drallwinkel verlaufenden Schneidensegmente 31a bis 31c der ersten Umfangsschneiden 31 im vorderen Längenbereich 30 einen nahezu ausschließlich ziehenden Schnitt und alle mit einem negativen Drallwinkel verlaufenden Schneidensegmente 41a bis 41c der zweiten Umfangsschneiden 41 im hinteren Längenbereich einen nahezu ausschließlich schiebenden oder drückenden Schnitt ausführen. Bei einer Fräsbearbeitung einer FVK-Platte werden daher gegeneinander gerichtete Axialkräfte erreicht, die eine Kompression des FVK-Werkstoffs bewirken und einer Delamination sowie Faserüberständen an den beiden Plattenoberflächen der FVK-Platte vorbeugen.

Die in dem vorderen Längenbereich 30 vorhandenen ersten Umfangsschneiden 31 und die in dem hinteren Längenbereich 40 vorhandenen zweiten Umfangsschneiden 41 weisen daher jeweils ein Spanteilerprofil auf. In dem vorderen Längenbereich 30 fungieren die mit einem positiven Drallwinkel verlaufenden ersten Nuten 32 aufgrund der größeren Nutbreiten als spanabführende Nuten. In dem hinteren Längenbereich 40 fungieren die mit einem positiven Drallwinkel verlaufenden ersten Nuten 33 aufgrund der verringerten Nutbreiten als Spanteilernuten oder Spanbrecher. In dem hinteren Längenbereich 40 fungieren die mit einem negativen Drallwinkel verlaufenden zweiten Nuten 42 aufgrund der größeren Nutbreiten als spanabführende Nuten. In dem vorderen Längenbereich 30 fungieren die mit einem negativen Drallwinkel verlaufenden zweiten Nuten 43 aufgrund der verringerten Nutbreiten als Spanteilernuten oder Spanbrecher.

Bei dem Schaftfräser 1 gemäß der ersten Ausführungsform der Erfindung entspricht die Nutbreite der ersten Nuten 32 im vorderen Längenbereich 30 des Schneidteils 20 der Nutbreite der zweiten Nuten 42 im hinteren Längenbereich 40 des Schneidteils 20.

### Zweite Ausführungsform

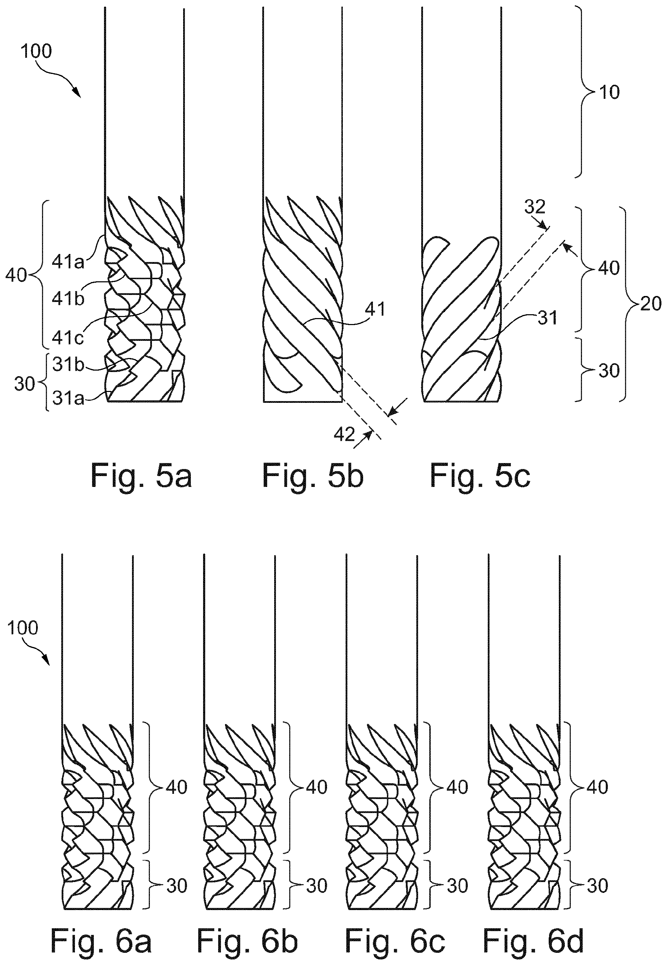

Die Fig. 5a bis 6d zeigen eine einen erfindungsgemäßen Schaftfräser 100 gemäß einer zweiten Ausführungsform der Erfindung. Der grundsätzliche Aufbau des Schaftfräsers 100 gemäß der zweiten Ausführungsform der Erfindung entspricht dem Aufbau des Schaftfräsers 1, weshalb im Folgenden nur auf die Unterschiede eingegangen wird. Die Teilung zumindest eines Teils der ersten Umfangsschneiden 31 und der zweiten Umfangsschneiden 41 in Schneidensegmente gemäß einer zweiten Ausführungsform der Erfindung wird im Gegensatz zum Schaftfräser 1 der ersten Ausführungsform der Erfindung dadurch erreicht, dass sich in Umfangsrichtung des Schaftfräsers 100 betrachtet nur jede zweite erste Nut 31 in den hinteren Längenbereich 40 hinein bis an das schaftseitige Ende des Schneidteils 20 heran erstreckt und sich die übrigen ersten Nuten 32 lediglich bis an den hinteren Längenbereich 40 heran erstrecken (vgl. Fig. 5c), sich in Umfangsrichtung des Schaftfräsers 100 betrachtet nur jede zweite zweite Nut 42 in den vorderen Längenbereich 30 hinein bis an das stirnseitige Ende des Schneidteils 20 heran erstreckt und sich die übrigen zweiten Nuten 42 lediglich bis an den vorderen Längenbereich 30 heran erstrecken (vgl. Fig. 5b), wobei die Nutbreite jeder ersten Nut 32 über ihre jeweilige Länge konstant ist, und die Nutbreite jeder zweiten Nut 42 über ihre jeweilige Länge konstant ist.

Bei dem Schaftfräser 100 gemäß der zweiten Ausführungsform der Erfindung sind auch die Nuttiefen der ersten Nuten 32 und der zweiten Nuten 42 über ihre jeweilige Länge konstant, so dass eine möglichst einfache und schnelle Fertigung des Schaftfräsers 100 erreicht werden kann, da bei einem Einschleifen der jeweiligen Nuten 32, 42 mit Hilfe einer Schleifscheibe weder der Anstellwinkel noch die Zustelltiefe der Schleifscheibe geändert werden muss.

## Patentansprüche

1. Schaftfräser (1; 100) zur Fräsbearbeitung von Verbundwerkstoffen, mit einer definierten Drehrichtung, einem Schaft (10) und einem Schneidteil (20), wobei der Schneidteil (20) sich von einem schaftseitigen Ende bis zu einem stirnseitigen Ende erstreckt und in einem an das stirnseitige Ende des Schneidteils (20) angrenzenden vorderen Längenbereich (30) eine Vielzahl von mit einem positiven Drallwinkel verlaufenden ersten Umfangsschneiden (31), die jeweils an eine mit einem positiven Drallwinkel verlaufende erste Nut (32) angrenzen, und in einem an das schaftseitige Ende des Schneidteils (20) angrenzenden hinteren Längenbereich (40) eine Vielzahl von mit einem negativen Drallwinkel verlaufenden zweiten Umfangsschneiden (41), die jeweils an eine mit einem negativen Drallwinkel verlaufende zweite Nut (42) angrenzen, aufweist, **dadurch gekennzeichnet, dass**
zumindest ein Teil der ersten Umfangsschneiden (31) im vorderen Längenbereich (30) jeweils in Schneidensegmente (31a, 31b, 31c) geteilt sind, und zumindest ein Teil der zweiten Umfangsschneiden (41) im hinteren Längenbereich (40) jeweils in Schneidensegmente (41a, 41b, 41c) geteilt sind.

2. Schaftfräser (1) nach Anspruch 1, **dadurch gekennzeichnet, dass**
die ersten Nuten (32) sich in den hinteren Längenbereich (40) hinein zumindest bis an das schaftseitige Ende des Schneidteils (20) heran erstrecken,
die zweiten Nuten (42) sich in den vorderen Längenbereich (30) hinein zumindest bis an das stirnseitige Ende des Schneidteils (20) heran erstrecken, wobei
die ersten Nuten (32) in dem hinteren Längenbereich (40) schmaler sind als in dem vorderen Längenbereich (30), und
die zweiten Nuten (42) in dem vorderen Längenbereich (30) schmaler sind als in dem hinteren Längenbereich (40).

3. Schaftfräser (1) nach Anspruch 2, **dadurch gekennzeichnet, dass**
die Nutbreite jeder zweiten Nut (42) in dem vorderen Längenbereich (30) das 0,1 - bis 0,8-Fache, vorzugsweise das 0,1 - bis 0,5-Fache, der Nutbreite jeder ersten Nut (32) in dem vorderen Längenbereich (30) beträgt, und
die Nutbreite jeder ersten Nut (32) in dem hinteren Längenbereich (40) das 0,1 bis 0,8-Fache, vorzugsweise das 0,1 - bis 0,5-Fache, der Nutbreite jeder zweiten Nut (42) in dem hinteren Längenbereich (40) beträgt.

4. Schaftfräser (1) nach einem der vorhergehenden Ansprüche, **dadurch gekennzeichnet, dass**
die Nutbreite jeder ersten Nut (32) in dem vorderen Längenbereich (30) gleich der Nutbreite jeder zweiten Nut (42) in dem hinteren Längenbereich (40) ist, und
die Nutbreite jeder ersten Nut (32) in dem hinteren Längenbereich (40) gleich der Nutbreite jeder zweiten Nut (42) in dem vorderen Längenbereich (30) ist.

5. Schaftfräser (1) nach einem der vorhergehenden Ansprüche, **dadurch gekennzeichnet, dass**
die ersten Nuten (32) in dem vorderen Längenbereich (30) tiefer sind als in dem hinteren Längenbereich (40), und
die zweiten Nuten (42) in dem hinteren Längenbereich (40) tiefer sind als in dem vorderen Längenbereich (30).

6. Schaftfräser (100) nach Anspruch 1, **dadurch gekennzeichnet, dass**
sich in Umfangsrichtung des Schaftfräsers (100) betrachtet nur jede zweite erste Nut (32) in den hinteren Längenbereich (40) hinein bis an das schaftseitige Ende des Schneidteils (20) heran erstreckt und sich die übrigen ersten Nuten (32) bis an den hinteren Längenbereich (40) heran erstrecken,
sich in Umfangsrichtung des Schaftfräsers (100) betrachtet nur jede zweite zweite Nut (42) in den vorderen Längenbereich (30) hinein bis an das stirnseitige Ende des Schneidteils (20) heran erstreckt und sich die übrigen zweiten Nuten (42) bis an den vorderen Längenbereich (30) heran erstrecken, wobei
die Nutbreite jeder ersten Nut (32) über ihre jeweilige Länge konstant ist, und
die Nutbreite jeder zweiten Nut (42) über ihre jeweilige Länge konstant ist.

7. Schaftfräser (1; 100) nach einem der vorhergehenden Ansprüche, **dadurch gekennzeichnet, dass** der vordere Längenbereich (30) kürzer ist als der hintere Längenbereich (40).

8. Schaftfräser (1; 100) nach einem der vorhergehenden Ansprüche, **dadurch gekennzeichnet, dass** die Länge des vorderen Längenbereichs (30) das 0,5- bis 4-Fache, vorzugsweise das 1- bis 2,5-Fache, des Durchmessers des Schaftfräsers (1; 100) beträgt.

9. Schaftfräser (1; 100) nach einem der vorhergehenden Ansprüche, **dadurch gekennzeichnet, dass**
jede erste Nut (32) in dem vorderen Längenbereich (30) so ausgelegt ist, dass sie die Spanfläche der jeweils angrenzenden Umfangsschneide (31) und die Freifläche der jeweils vorauslaufenden Umfangsschneide (31) bildet, und
jede zweite Nut (42) in dem hinteren Längenbereich (40) so ausgelegt ist, dass sie die Spanfläche der jeweils angrenzenden Umfangsschneide (41) und die Freifläche einer jeweils in Drehrichtung vorausliegenden Umfangsschneide (41) bildet.

10. Schaftfräser (1; 100) nach einem der vorhergehenden Ansprüche, **dadurch gekennzeichnet, dass** die Drallwinkel der ersten und zweiten Umfangsschneiden (31, 41) betragsmäßig gleich groß sind.

11. Schaftfräser (1; 100) nach einem der vorhergehenden Ansprüche, **dadurch gekennzeichnet, dass** die ersten und zweiten Umfangsschneiden (31, 41) jeweils äquidistant um eine Drehachse des Schaftfräsers (1; 100) verteilt sind.

12. Schaftfräser (1; 100) nach einem der vorhergehenden Ansprüche, **dadurch gekennzeichnet, dass** die Zahl der ersten Umfangsschneiden (31) gleich der Zahl der zweiten Umfangsschneiden (41) ist.

13. Verfahren zur Schleifbearbeitung eines Schneidteils (20) eines Schaftfräsers (1) mit den Merkmalen eines der Ansprüche 1 bis 12, **dadurch gekennzeichnet, dass**
die ersten Nuten (32) und zweiten Nuten (42) jeweils mit Hilfe einer Schleifscheibe, die ein einem Nutquerschnitt der ersten Nut (32) und zweiten Nut (42) entsprechendes Schleifscheibenprofil hat und über die Länge der entsprechenden Nut (32, 42) in einem Zug über den Schneidteil (20) geführt wird, mit einem Drall um eine Drehachse des Schaftfräsers (1) sequentiell in den Schneidteil (20) geschliffen werden, und
die Nutbreite einer jeweils einzuschleifenden Nut (32, 42) durch eine Änderung des Anstellwinkels und/oder der Zustelltiefe der Schleifscheibe gegenüber der Drehachse am Übergang von dem vorderen Längenbereich (30) in den hinteren Längenbereich (40) oder von dem hinteren Längenbereich (40) in den vorderen Längenbereich (30) verringert oder vergrößert wird.

14. Verfahren zur Schleifbearbeitung eines Schneidteils (20) eines Schaftfräsers (1) mit den Merkmalen eines der Ansprüche 1 bis 12, **dadurch gekennzeichnet, dass**
die ersten Nuten (32) und zweiten Nuten (42) jeweils mit Hilfe einer Schleifscheibe, die ein einem Nutquerschnitt der ersten Nut (32) und zweiten Nut (42) entsprechendes Schleifscheibenprofil hat und über die Länge der entsprechenden Nut (32, 42) in einem Zug über den Schneidteil (20) geführt wird, mit einem Drall um eine Drehachse des Schaftfräsers (1) sequentiell in den Schneidteil (20) geschliffen werden, und
die Nutbreite einer jeweils einzuschleifenden Nut (32, 42) durch Einschleifen einer weiteren parallel versetzten Nut in den vorderen Längenbereich (30) oder hinteren Längenbereich (40) vergrößert wird.
